# EUROPEAN PATENT APPLICATION

(11) **EP 3 492 888 A1**
(43) Date of publication of application: **05.06.2019**
(21) Application number: 17204349.9
(22) Date of filing: 29.11.2017
(51) Int. Cl.: G01J 3/02

(54) **SPECTROMETER OR SPECTROGRAPH, AIRCRAFT OR SPACE SATELLITE HAVING A SPECTROMETER OR SPECTROGRAPH AND USE OF A SPECTROMETER OR SPECTROGRAPH**

(71) Applicant: OHB System AG, 28359 Bremen (DE)
(72) Inventor: Peacocke, Tully, 82211 Herrsching am Ammersee (DE); Hering, Marco, 80639 München (DE); Schöggl, Roland, 83607 Holzkirchen (DE)
(74) Representative: Hoffmann Eitle

(57) **Abstract**

A spectrometer or spectrograph has at least one detector, at least one optical train and a plurality of telescopes (12), each of which is connected with an optical train via an optical fiber (14).

## Description

### TECHNICAL FIELD

The invention relates to a spectrometer or spectrograph, an aircraft or space satellite having a spectrometer or spectrograph and a use of a spectrometer or spectrograph.

Spectrometers are widely used for trace gas-, particularly CO₂-monitoring and are usually provided on aircrafts or space satellites in order to "scan" the earth. Conventional imaging spectrometers usually have a front telescope which images the scene onto a slit which defines the actual part of the scene, which is observed. In the direction towards a detector, a collimating optics collimating the radiation, particularly light incident from the slit is provided. Further along the direction of the incident radiation, a dispersive element is provided which separates the collimated beam of radiation into its different wavelengths. Finally, a focusing optics images the slit onto a detector, which is formed substantially perpendicular to the direction of the incident radiation. The combination of collimating optics, the dispersive element and focusing optics can be called an optical train. Thus, the extension of the slit corresponds to a first direction in the plane of the detector, and the different wavelengths are arranged in a second direction in the mentioned plane, substantially perpendicular to the slit-or spatial direction. Since the plane of the slit is directly imaged onto the plane of the detector, the intensity distribution perpendicular to the extension of the slit is directly linked to the spectral response function of the spectrometer. Since this function has to be constant and well-defined, slit homogenizers are often used in order to obtain a uniform intensity distribution perpendicular to the extension of the slit. Such homogenizers are sensitive and delicate devices and necessitate a very accurate alignment as well as an anamorphic design of the front telescope or the collimator, which further increases the costs and leads to design restrictions.

Moreover, the above-described structure of conventional imaging spectrometers having a rigid mounting structure between the slit and a telescope, leads to a comparably large size of a spectrometer which is not easily compatible with the surroundings and boundary conditions inside an aircraft or a space satellite, which the spectrometer has to meet. Finally, there is an intrinsic variation in irradiance of the slit plane due to lens fall-off, which conventionally needs to be overcome by complex optics. In addition, the slit plane ideally has to be illuminated telecentrically, which also requires complex and expensive optics. Such optics, in some applications, also have to ensure that different wavelengths coincide spatially, so that a so-called co-registration is achieved, which triggers the need to minimize effects of lateral colour aberrations, which further increases the size and complexity of the front telescope.

### SUMMARY OF THE INVENTION

The invention has the object of solving at least some of the above problems, and the spectrometer or spectrograph according to the invention is defined in claim 1.

Accordingly, the spectrometer described herein has at least one detector, at least one optical train and a plurality of telescopes, each of which is connected with an optical train via an optical fiber. In this context, it should be emphasized that the invention provides a spectrometer or spectrograph so that a spectrograph is also meant even if only a spectrometer is mentioned in the following or above. The same applies to the telescope(s), which are called lens(es) in the following, but the more general term "telescope" is meant. In other words, the present invention covers, for example, the use of refractive elements, such as lenses, as well as reflective elements, such as mirrors, in order to image the scene.

According to the invention, the detector and the optical train essentially correspond to those of a conventional spectrometer, but the plurality of telescopes and the optical fibers replaces the conventional front telescope and the conventional slit is essentially constituted by the plurality of optical fibers arranged in a line at least at their detector side ends. Since each lens images only a very small cutout of the scene, the complexity is significantly reduced as compared to the conventional front telescope. In particular, so-called "ghost images" or lateral colour aberrations are excluded by the design using plural lenses and, consequently, without complex and costly optics. Moreover, the (micro)lenses do not suffer from a decreasing intensity at the edges of the field of view, so that there is a high uniformity of the incident radiation. This can be explained as follows. Also the microlenses have a fall-off of the intensity towards the edge of the field of view. However, since the field of view is small, the effect of the fall-off is also small. In addition and more important, each of the mircolenses images only one spatial sample and couples all radiation from this spatial sample (cutout of the scene) into a single optical fiber. Accordingly, any fall-off of the lenses is the same for all spatial samples and, therefore, there is a high uniformity regarding intensity among the different spatial samples. Further, optical testing can be significantly simplified, as it is not necessary to test the entire field of view, but the image quality can be tested for each individual lens in a simple manner. Moreover, parameters such as the spatial or angular sampling distance can be changed at a late design stage since there is no significant impact on the optic design.

In connection with the imaging quality, the use of fiber connections between the lenses and the optical train has the advantage of inherent homogenization when the radiation is transmitted by the fiber. Whereas the radiation might be inhomogeneous at the entrance of the fiber, due to internal reflection within the fiber as the radiation travels through the fiber, the radiation is homogenized which renders the above-described homogenizer unnecessary. Moreover, optical fibers have the inherent property of scrambling any polarization which additionally makes a polarization scrambler unnecessary. Nevertheless, it should be mentioned that fibers, in which the polarization is not scrambled, can also be used.

The optical fibers used in the present invention further have the advantage of avoiding a rigid interface between the optics and the detector, so that any limitations or boundary conditions which are present on the side of the aircraft or the space satellite, can be accommodated much more easily and with flexibility. In essence, the spectrometer is provided with a modular structure, since there is, on the one hand, the spectrometer unit having the optical train including collimating optics, a dispersing element and focusing optics, as well as the actual detector. The second unit, which is connected with the spectrometer unit via the plurality of optical fibers, is the plurality of lenses which can be accommodated in several units as described below and can be called a compound eye telescope or unit.

Finally, the fiber dimensions for any two bands of wavelengths can be chosen to suit the particular spectrometer and the focal length of the telescope which can be appropriately selected to ensure that the ground sample or scene imaged is the same for each spectral channel. It can also be noted again at this point that "classic" optics suffer from so-called fall-off at the edge of the field of view. This is advantageously not the case with the plurality of telescopes used according to the present invention, in which there is intrinsic uniformity of the fiber irradiance. Moreover, the radiation entering the fiber can be controlled, for example, by an adjustable aperture, and can vary between channels so as to suit the fiber and spectral radiance of the source. This further eliminates the need for complex optics.

Preferred embodiments of the spectrometer according to the present invention are described in the further claims.

In order to correspond to the slit of a conventional spectrometer, plural detector side fiber ends are preferably arranged in a line.

In order to accommodate plural functions of a spectrometer, so as to analyze incident radiation, particularly light, in different spectral bands, a first group of detector side fiber ends is connected to a first optical train and detector, and a second group of detector side fiber ends is connected to a second optical train and detector. Further optical trains and detectors can be present, and further groups of the detector side fiber ends can be connected with these. Consequently, separate detectors, for example for spectral analysis of the visible light, infrared, etc. can be provided and can be realized by the spectrometer having the above-described structure in a still compact and low complexity structure.

Corresponding to the above-described analysis of different bands of wavelengths, the telescopes related to the different bands of the inventive spectrometer are preferably grouped, and the optical axis of all lenses of one group are aligned so as to meet in a point in the detected space. In other words, all lenses of one group image the same scene or same cutout of the scene, for example on earth, so that an extensive spectral analysis can be performed.

In this context, the points, in which the optical axis of plural groups of lenses meet, are preferably arranged in a line. Consequently, plural groups of lenses image an elongate scene on earth, for example having dimensions of 50 meters by 2 kilometers, with each group of lenses imaging a scene of 50 by 50 meters.

In order to easily adjust the optical axis of the lenses, there is preferably at least one optical compensator providing additional freedom in arranging the telescope and/or fiber, such as an adjustable mask, means for adjusting the position and/or orientation of the telescope side fiber end of the optical fiber, means for tilting the telescope and/or at least one moveable lens element of the telescope, provided for at least one, preferably each telescope and/or the associated fiber.

With regard to an orderly arrangement of the lenses, it is preferred to arrange these in at least one array.

Nevertheless, the array does not need to have an elongate appearance corresponding to the slit of a conventional spectrometer. Rather, since the optical axis of each lens can be adjusted easily, for example every second lens or group of lenses in an originally elongate array can be provided in an adjacent, parallel array, so as to keep the so-called compound eye unit compact.

In order to facilitate the handling of plural lenses, these are preferably grouped in units. For example, all of the above-mentioned lenses imaging the same cutout of the scene on earth can be accommodated in one and the same unit.

Within such a unit, the lenses are preferably arranged in a line.

Finally, it offers advantages with regard to the efficient handling and mounting of the described unit, when this is formed as a cuboid.

In order to increase the flexibility of the system, at least one, preferably plural and most preferably all optical fibers are each connected to the associated lens by means of a connector.

Whereas the invention is constituted by the above-described spectrometer, it is preferred to use such a spectrometer in an aircraft or space satellite which is, consequently, also to be considered subject-matter of the present disclosure. Finally, as can be taken from the above, the spectrometer described therein is preferably used for trace gas, in particular CO₂-monitoring.

### BRIEF DESCRIPTION OF THE DRAWINGS

Hereinafter, the invention will be described with reference to the drawings showing a preferred embodiment, in which:
- Fig. 1: shows a perspective view of a unit, in which four lenses are accommodated; and
- Fig. 2: shows a perspective view of the compound eye unit of the spectrometer.

### DETAILED DESCRIPTION OF A PREFERRED EMBODIMENT OF THE INVENTION

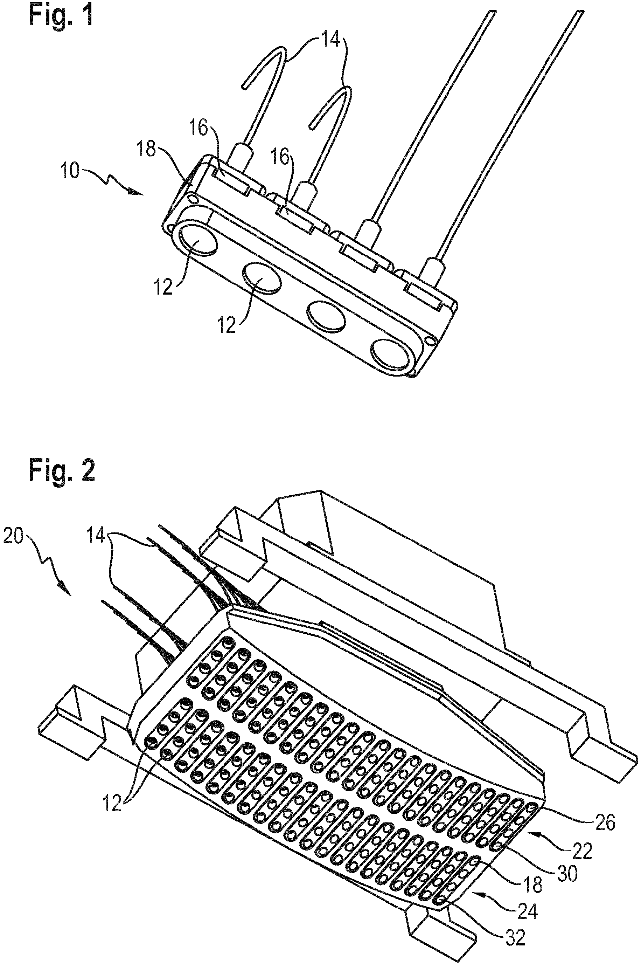

As can be taken from figure 1, in a so-called unit 10 in the embodiment shown, four lenses 12 are arranged in a line in an essentially cuboid housing 18, and each lens 12 is connected with an optical fiber 14. The housing 18 can essentially have plural, in the case shown four bore holes to accommodate a lens 12 in each one of them. Between each lens 12 and the associated optical fiber 14, a mask 16, which can also be called a spatial filter is provided in a manner adjustable by an appropriate, external tool. In this manner, the optical axis, in other words the line of sight of each lens 12 can be accurately aligned. In this manner, it can be ensured that each lens images the identical scene, for example a 50 meters by 50 meters square on earth. With this arrangement, each lens covers a particular wavelength band, and each fiber is connected with a particular, suitable detector. As can additionally be taken from figure 2, plural lenses can be arranged in lines and in plural units corresponding to the detector side fiber ends arranged in lines so as to constitute the slit which would be present in a conventional detector. Nevertheless, the plural lenses can also be arranged differently. It should also be mentioned that the line of fiber ends corresponding to the lenses shown in figure 1 could constitute this slit for a single wavelength band. It can moreover be taken from figure 1 that the optical fibers 14 are connected with the lenses via suitable connectors shown with a greater thickness than the optical fibers 14.

As already mentioned, figure 2 shows the so-called compound eye unit 20 or compound eye telescope which is connected with the spectrometer unit (not shown) via plural optical fibers 14. In the arrangement of figure 2 plural units as shown in figure 1 are arranged in two parallel arrays 22, 24 which helps to reduce the extension of the array and keep the unit compact. As can be taken from the arrangement of figure 2, the units of the lower array 24 are essentially "taken out" between adjacent units of the upper array 22. However, the adjacent arrangement of arrays of lenses does not affect the imaging quality. It should be mentioned again that the plurality of lenses constituting the upper row 26 in the upper array 22 of units in combination with the upper row 18 in the lower array 24 of units correspond to the fiber ends forming the slit for a first detector. The same holds true for the lowermost row 30, 32 of each array of units, as well as for the remaining two rows, in the embodiment shown, which correspond to the slits for further detectors.

## Claims

1. A spectrometer or spectrograph having at least one detector, at least one optical train and a plurality of telescopes (12), each of which is connected with an optical train via an optical fiber (14).

2. The spectrometer or spectrograph in accordance with claim 1, **characterized in that** plural detector side fiber ends are arranged in a line.

3. The spectrometer or spectrograph in accordance with claim 1 or 2, **characterized in that** a first group of detector side fiber ends is connected to a first optical train and detector, and a second group of detector side fiber ends is connected to a second optical train and detector.

4. The spectrometer or spectrograph in accordance with one of claims 1 to 3, **characterized in that** the telescopes (12) are grouped, the optical axes of all telescopes (12) of one group being aligned so as to meet in a point in the detected space.

5. The spectrometer or spectrograph in accordance with claim 4, **characterized in that** the points, in which the optical axes of plural groups of telescopes (12) meet, are arranged in a line.

6. The spectrometer or spectrograph in accordance with one of the preceding claims, **characterized in that** at least one optical compensator, such as an adjustable mask (16), means for adjusting the position and/or orientation of the telescope side fiber end of the optical fiber, means for tilting the telescope and/or at least one moveable lens element of the telescope, is provided for at least one, preferably each telescope (12) and/or the associated fiber (14).

7. The spectrometer or spectrograph in accordance with one of the preceding claims, **characterized in that** the telescopes (12) are arranged in at least one array (22, 24) .

8. The spectrometer or spectrograph in accordance with claim 7, **characterized in that** the telescopes (12) are arranged in two parallel arrays (22, 24).

9. The spectrometer or spectrograph in accordance with one of the preceding claims, **characterized in that** plural telescopes (12) are grouped in units (10).

10. The spectrometer or spectrograph in accordance with claim 9, **characterized in that** in at least one unit (10) the telescopes (12) are arranged in a line.

11. The spectrometer or spectrograph in accordance with claim 9 or 10, **characterized in that** at least one unit (10) is formed as a cuboid.

12. The spectrometer or spectrograph in accordance with one of the preceding claims, **characterized in that** at least one optical fiber (14) is connected to a telescope (12) by means of a connector.

13. An aircraft or space satellite having at least one spectrometer or spectrograph in accordance with one of the preceding claims.

14. A use of a spectrometer or spectrograph in accordance with one of claims 1 to 12 for trace gas-, in particular CO₂-monitoring.
